# EUROPEAN PATENT SPECIFICATION

(11) **EP 0 670 978 B1**
(45) Date of publication and mention of the grant of the patent: **28.01.1998**
(21) Application number: 92902454.5
(22) Date of filing: 15.11.1991
(51) Int. Cl.: F16K 24/04, F16K 27/00, F16K 31/06

(54) **A PROTECTIVE DEVICE FOR AN EXHAUST CHANNEL OF AN ELECTRICALLY CONTROLLED PNEUMATIC VALVE**
SCHUTZVORRICHTUNG FÜR EINEN ABGASKANAL EINES ELEKTRISCH GESTEUERTEN PNEUMATISCHEN VENTILS
DISPOSITIF DE PROTECTION POUR LE CONDUIT D'ECHAPPEMENT D'UNE SOUPAPE PNEUMATIQUE A REGULATION ELECTRIQUE

(30) Priority: 16.01.1991 SE 9100138
(43) Date of publication of application: 13.09.1995
(73) Proprietor: AKTIEBOLAGET REXROTH MECMAN, 125 81 Stockholm (SE)
(72) Inventor: ARKESTAL, Stig, S-135 55 Tyresö (SE)
(74) Representative: Modin, Jan
(86) International application number: SE9100778
(87) International publication number: WO9213221

(56) References cited:
- EP-A- 0 196 621
- DE-C- 3 709 474

## Description

The invention concerns a protective device for an electrically controlled pneumatic valve provided with a solenoid coil and an armature, which is guided in an armature tube and is operable by means of said coil, as known from EP-A 0196621.

In such electrically controlled valves certain problems arise in that moisture and/or impurities may intrude into the inside of the valve through the exhaust channel thereof. When the coil is energized, the valve will be heated with an associated thermal "pumping" effect involving a risk of leakage between the valve casing, the coil and the armature tube. The electrical components, in particular the coil, are sensitive to incoming water, and it has turned out to be very difficult to prevent such leakage by the use of seals. The associated problems have become especially pronounced in recent years in that electrically controlled valves are often freely mounted at the underside of vehicles, in particular on trucks, so that contaminated water, salt from the roads and other impurities intrude into the valves through the exhaust channels thereof. Damage may also occur upon high pressure rinsing which is currently used for cleaning such vehicles.

The object of the present invention is therefore to prevent moisture and/or impurities from intruding into the inner parts of the electrically controlled valve, especially into the coil and the valve mechanism thereof.

This object is achieved by a protective device having the features set forth in the characterizing portion of claim 1. Suitable further features are stated in the dependent claims 2 through 10.

By using the space or gap between the coil and the armature tube, which is difficult to seal because of the pumping effect mentioned above, as a portion of the exhaust channel of the valve, this space or gap will be drained and rinsed effectively by the exhaust air flowing therethrough. Moreover, this space or gap is protected by the adjoining diverting passage which prevents impurities from intruding directly into the inside of the valve. The exhaust air flowing therethrough will also act as a cooling agent which is effective over large surface areas, in particular in the gap forming the flow passage. Thus, the coil will be kept dry and operable as well as the valve mechanism itself.

Furthermore, by arranging a sealing element serving as a check valve, as set forth in claim 3, moisture and impurities will be prevented from entering backwards into the inside of the valve through the exhaust channel.

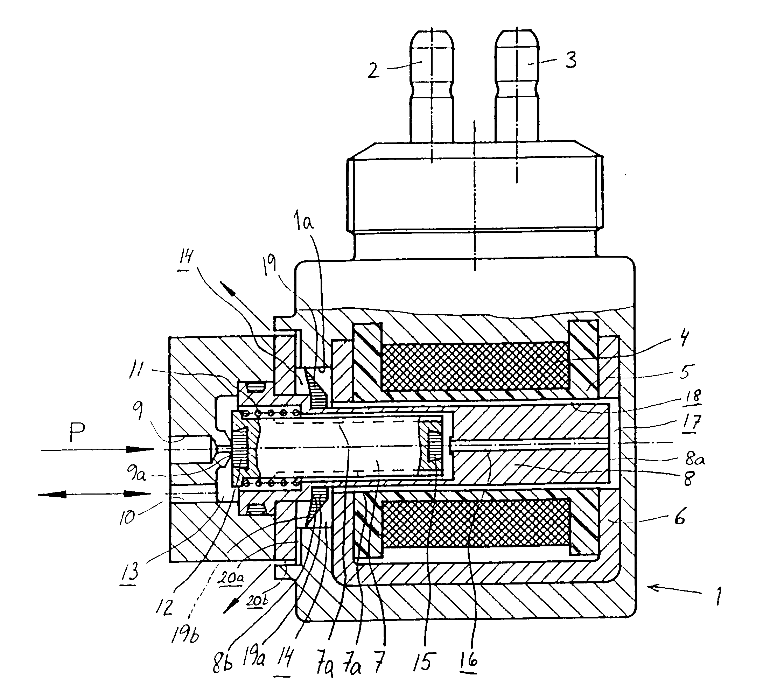

The invention will be explained further below with reference to the appended drawing which illustrates, in a side view and partially in a central section, an electrically controlled pneumatic valve having a protective device according to the invention.

The electrically controlled seat valve shown on the drawing comprises a casing 1, which at the top has two electrical contact pins 2,3 (the earth pin is not shown), which are connected to a solenoid coil 4. The wire windings of the coil are wound onto a cylindrical winding sleeve or bobin 5, which is arranged centrally in the casing in a soft iron body 6 and encloses a magnetical armature 7 being axially movable inside the winding sleeve 5 and guided in a partially tubular body, the latter being fixedly mounted in the casing 1 and normally denoted armature tube 8. The casing 1 is moulded around the unit consisting of the soft iron body 6, the winding sleeve 5 and the solenoid coil 4, whereas the armature tube 8 is insertable into the cylindrical hollow space.

To the left on the drawing, the casing has an inlet port 9 for pressurized air and an outlet/return port 10, these ports 9,10 being intended to be connected via a distribution plate or the like to a main valve, in particular a directional valve, e.g. connected to a working cylinder.

In the shown position of the magnetical armature 7, the latter engages sealingly with an elastic sealing element 12 against a valve seat 9a associated with a port 9 in a chamber 13 by means of a pressure spring 11, so the valve is closed, and there is no feeding pressure. The port 10, which serves as a return port in this position (return from the main valve connected thereto), communicates in this position with the exhaust port 14 of the valve via an exhaust channel being formed in a special way in accordance with the present invention, as will be explained below.

By the effect of the magnetic field from the solenoid coil 4, when the latter is connected to a voltage and is energized by an electrical current, the magnetical armature 7 is displaced against the force of the pressure spring 11 into its other end position, not shown, so that the opposite end surface (to the right of the drawing) of the magnetical armature with an elastic sealing element 15 seals off the mouth of a central exhaust channel 16 extending through the massive end portion of the armature tube 8. In this non-illustrated position the valve is open, and the feeding pressure is transferred from the inlet port 9 to the outlet port 10 for a corresponding manoeuvring of the main valve connected thereto.

When the port 10 serves as a return port and communicates with the exhaust port 14 in the shown position of the valve, return air flows via the chamber 13 and further along the outside of the armature 7, which for this purpose is provided with longitudinal groove channels 7a (illustrated by dashed lines on the drawing) on its mantle surface. The air flows thereafter through the central exhaust channel 16 (to the right on the drawing) in the massive end portion of the armature tube 8 into a space 17 located between the end surface 8a of the armature tube and the inside of the casing 1. This space 17 serves as a connecting passage to an exhaust passage or gap 18 extending axially in the other direction (to the left on the drawing) and which is substantially hollow cylindrical and located radially outside the armature tube 8 in the region radially inside the winding sleeve 5 of the solenoid coil 4.

The exhaust passage or gap 18 merges axially outside the soft iron body 6 with an annular opening constituting the proper exhaust port 14. In this opening, a sealing element 19 of elastic material is securely arranged, e.g. by a press fit and/or vulcanization, on the outside of the armature tube 8, a rather wide base portion 19a of the sealing element 19 engaging with one of its axial sides against a radially protruding step shoulder 8b of the armature tube 8 so as to be supported thereby. The radially outer portion of the sealing element 19 is formed with a tapering ring lip 19b, the free end portion of which engaging resiliently against an internal cylinder surface la, which forms a portion of the casing 1 and defines the opening or the exhaust port 14 radially outwardly.

From the annular opening or exhaust port 14 there extends a diverting passage like a labyrinth having a first portion 20a extending radially outwardly and a second portion 20b extending axially and communicating freely with the outside of the valve.

Since the diverting passage 20a,20b is angled somewhat like a labyrinth (having at least two diverting turns), the sealing element 19 is protected against external influences and direct injection of impurity particles against the same. Water or some other liquid, which intrudes through the diverting passage 20a,20b, will be stopped by the sealing element 19 because the ring lip 19b thereof is obliquely positioned axially outwardly and therefore seals effectively by its engagement with the surface la. When exhaust air flows from the return port 10 via the groove channels 7a, the exhaust channel 16, the connecting space 17 and the exhaust passage 18 to the exhaust port 14, the ring lip 19b will yield resiliently, so that exhaust air can flow freely to the outside via the diverting passage 20a,20b. The sealing element 19 thus serves as a check valve and prevents liquid, e.g. contaminated water or a washing liquid, as well as solid impurity particles from passing through the exhaust port 14 to the inside of the valve.

By the resilient engagement of the ring lip 19b against the surface la minor dimensional changes of the walls defining the exhaust opening 14, caused by thermal dilatation upon energizing the coil 4, will be compensated while securing an effective sealing. Moreover, the heating will be reduced by the exhaust air flowing therethrough, the flowing air serving as a cooling agent being effective over large surface areas, in particular in the hollow cylindrical exhaust passage 18 radially inside the solenoid coil 4.

In case impurities would in fact get stuck in the diverting passage 20a,20b, the exhaust port 14 or (exceptionally) inside the sealing element 19, these impurities will be flushed out again upon the next blowing out of exhaust air. Thus, the exhaust channel and the sealing element serving as a check valve will be drained and rinsed by the exhaust air flowing therethrough.

The protective device described above may be modified in many ways within the scope of the present invention as defined in the appended claim 1.

The connecting space 17 may be replaced by one or more radial bores from the mantle surface of the armature tube 8 to the axial exhaust channel 16. Moreover, the gap 18, the opening 14 and the sealing element 19 do not necessarily have to be hollow cylindrical or annular, respectively, but may be devided circumferentially.

Of course, it is also conceivable to arrange more sealing elements 19 serving as check valves in series one after the other. Likewise, the labyrinth-like diverting passage (with possible further sealing elements serving as check valves) may be formed differently.

The essential feature is the draining and rinsing effect described above which is principally achieved in that the gap 18 between the coil 4 (or its winding sleeve 5) and the armature tube 8 forms a portion of the exhaust channel of the valve.

## Claims

1. A protective device for an electrically controlled pneumatic valve provided with a solenoid coil and an armature (7), which is guided in an armature tube (8) and is operable by means of said coil, said protective device serving to prevent moisture and/or impurities from intruding into the valve via an exhaust channel, **characterized** in that the exhaust channel of the valve includes an axially extending flow passage (18) located radially between said solenoid coil (4) and said armature tube (8), said flow passage (18) being connected to the outside of the valve via a diverting passage (20a,20b).

2. A protective device as set forth in claim 1,
**characterized** in that the diverting passage (20a,20b) is labyrinth-like with at least two angled turns.

3. A protective device as set forth in claim 1 or 2, **characterized** in that said flow passage merges with an opening (14) having at least one sealing element (19) arranged therein and serving as a check valve, said opening (14) communicating with said diverting passage (20a,20b).

4. A protective device as set forth in claim 3,
**characterized** in that the sealing element (19) is fixedly mounted in said opening (14) and is provided with a portion (19b) which is resilient in the exhaust flow direction.

5. A protective device as set forth in claim 4,
**characterized** in that the resilient portion of the sealing element is formed by a lip portion (19b), which in lack of an exhaust flow engages sealingly against a surface (1a) defining said opening (14).

6. A protective device as set forth in claim 5,
**characterized** in that said opening (14) is annular and in that said lip portion is constituted by a ring lip (19b).

7. A protective device as set forth in any one of claims 3 through 6, **characterized** in that the diverting passage of the exhaust channel includes a first portion (20a) extending substantially radially outwardly from said opening (14) and a second portion (20b) extending substantially axially and being connected to said first portion (20a).

8. A protective device as set forth in any one of claims 1 through 7, **characterized** in that the exhaust channel of the valve includes a central channel (16) extending through an end portion of the armature tube (8) and being connected to said flow passage (18).

9. A protective device as set forth in claim 8,
**characterized** in that said flow passage (18) and said central channel (16) extend axially in opposite directions.

10. A protective device as set forth in any one of the preceding claims, **characterized** in that said flow passage (18) is substantially hollow cylindrical.

## Patentansprüche

1. Schutzvorrichtung für ein elektrisch gesteuertes pneumatisches Ventil, das mit einer Magnetspule und einem Anker (7) ausgestattet ist, der in einem Ankerrohr (8) geführt wird und mit Hilfe der Spule betätigbar ist, wobei die Schutzvorrichtung dazu dient zu verhindern, daß Feuchtigkeit und/oder Verunreinigungen über einen Auslaßkanal in das Ventil eindringen, dadurch **gekennzeichnet**, daß der Auslaßkanal des Ventils einen sich axial erstreckenden Strömungsdurchgang (18) umfaßt, der radial zwischen der Magnetspule (4) und dem Ankerrohr (8) angeordnet ist, wobei der Strömungsdurchgang (18) über einen Umleitungsdurchgang (20a, 20b) mit dem Äußeren des Ventils verbunden ist.

2. Schutzvorrichtung nach Anspruch 1, dadurch **gekennzeichnet**, daß der Umleitungsdurchgang (20a, 20b) labyrinthähnlich mit wenigstens zwei winkligen Wendungen ist.

3. Schutzvorrichtung nach Anspruch 1 oder 2, dadurch **gekennzeichnet,** daß sich der Strömungsdurchgang mit einer Öffnung (14) vereinigt, in deren Inneren wenigstens ein Dichtungselement (19) angeordnet ist, das als ein Rückschlagventil dient, wobei die Öffnung (14) in Verbindung mit dem Umleitungsdurchgang (20a, 20b) steht.

4. Schutzvorrichtung nach Anspruch 3, dadurch **gekennzeichnet,** daß das Dichtungselement (19) fest in der Öffnung (14) angebracht ist und mit einem Abschnitt (19b) versehen ist, der in Richtung der Auslaßströmung federnd ist.

5. Schutzvorrichtung nach Anspruch 4, dadurch **gekennzeichnet,** daß der federnde Abschnitt des Dichtungselements von einem Lippenabschnitt (19b) gebildet ist, der bei Abwesenheit einer Auslaßströmung abdichtend gegen eine die Öffnung (14) definierende Oberfläche (1a) anliegt.

6. Schutzvorrichtung nach Anspruch 5, dadurch **gekennzeichnet**, daß die Öffnung (14) ringförmig ist, und daß der Lippenabschnitt von einer Ringlippe (19b) gebildet wird.

7. Schutzvorrichtung nach einem der Ansprüche 3 bis 6, dadurch **gekennzeichnet**, daß der Umleitungsdurchgang des Auslaßkanals einen ersten Abschnitt (20a), der sich im wesentlichen radial von der Öffnung (14) nach außen erstreckt, und einen zweiten Abschnitt (20b) umfaßt, der sich im wesentlichen axial erstreckt und mit dem ersten Abschnitt (20a) verbunden ist.

8. Schutzvorrichtung nach einem der Ansprüche 1 bis 7, dadurch **gekennzeichnet**, daß der Auslaßkanal des Ventils einen Zentralkanal (16) umfaßt, der sich durch einen Endabschnitt des Ankerrohrs (8) hindurch erstreckt und mit dem Strömungsdurchgang (18) verbunden ist.

9. Schutzvorrichtung nach Anspruch 8, dadurch **gekennzeichnet**, daß sich der Strömungsdurchgang (18) und der Zentralkanal (16) axial in entgegengesetzte Richtungen erstrecken.

10. Schutzvorrichtung nach einem der vorhergehenden Ansprüche, dadurch **gekennzeichnet,** daß der Strömungsdurchgang (18) im wesentlichen hohlzylindrisch ist.

## Revendications

1. Dispositif de protection pour une soupape pneumatique commandée électriquement dotée d'un solénoïde et d'une armature (7), qui est guidée dans un tube d'armature (8) et est adaptée à être actionnée au moyen dudit solénoïde, ledit dispositif de protection servant à empêcher que de l'eau et/ou des impuretés pénètrent dans la soupape via un canal d'échappement, caractérisé en ce que le canal d'échappement de la soupape comprend un passage d'échappement s'étendant axialement (18) positionné radialement entre ledit solénoïde (4) et ledit tube d'armature (8), ledit passage d'échappement (18) étant relié à l'extérieur de la soupape via un passage de déviation (20a, 20b).

2. Dispositif de protection selon la revendication 1, caractérisé en ce que le passage de déviation (20a, 20b) est semblable à un labyrinthe avec au moins deux coudes angulaires.

3. Dispositif de protection selon la revendication 1 ou 2, caractérisé en ce que ledit passage d'échappement fusionne avec une ouverture (14) comportant au moins un élément d'étanchéité (19) agencé en son sein et servant de soupape d'arrêt, ladite ouverture (14) communiquant avec ledit passage de déviation (20a, 20b).

4. Dispositif de protection selon la revendication 3, caractérisé en ce que l'élément d'étanchéité (19) est monté fixement dans ladite ouverture (14) et est doté d'une portion (19b) qui est élastique dans le sens du flux d'échappement.

5. Dispositif de protection selon la revendication 4, caractérisé en ce que la portion élastique de l'élément d'étanchéité est formée par une portion de bec (19b), qui, en l'absence d'un flux d'échappement, s'engage en toute étanchéité contre une surface (1a) définissant ladite ouverture (14).

6. Dispositif de protection selon la revendication 5, caractérisé en ce que ladite ouverture (14) est annulaire et en ce que ladite portion de bec est constituée par un bec annulaire (19b).

7. Dispositif de protection selon l'une quelconque des revendications 3 à 6, caractérisé en ce que le passage de déviation du canal d'échappement comprend une première portion (20a) s'étendant sensiblement radialement vers l'extérieur de ladite ouverture (14) et une seconde portion (20b) s'étendant sensiblement axialement et étant reliée à ladite première portion (20a).

8. Dispositif de protection selon l'une quelconque des revendications 1 à 7, caractérisé en ce qué le canal d'échappement de la soupape comprend un canal central (16) s'étendant via une portion d'extrémité du tube d'armature (8) et étant relié audit passage d'échappement (18).

9. Dispositif de protection selon la revendication 8, caractérisé en ce que ledit passage d'échappement (18) et ledit canal central (16) s'étendent axialement dans des directions opposées.

10. Dispositif de protection selon l'une quelconque des revendications précédentes, caractérisé en ce que ledit passage d'échappement (18) est en forme de cylindre creux.
